Europäisches Patentamt

European Patent Office

Office européen des brevets

(19)

(11) Numéro de publication : **0 128 800**
**B1**

(12) **FASCICULE DE BREVET EUROPÉEN**

(45) Date de publication du fascicule du brevet :
04.03.87

(51) Int. Cl.⁴ : **G 02 B   6/28**, G 02 B 26/02

(21) Numéro de dépôt : **84401054.6**

(22) Date de dépôt : **22.05.84**

(54) Quadripôle optique et multipôle comprenant de tels quadripôles.

(30) Priorité : **10.06.83 FR 8309650**

(43) Date de publication de la demande :
**19.12.84 Bulletin 84/51**

(45) Mention de la délivrance du brevet :
**04.03.87 Bulletin 87/10**

(84) Etats contractants désignés :
**DE GB IT**

(56) Documents cités :
**DE-A- 3 135 205**
**PATENTS ABSTRACTS OF JAPAN, volume 6, no. 13,
26 janvier 1982, (P-99)(891)**
**PATENTS ABSTRACTS OF JAPAN, volume 4, no. 103,
23 juillet 1980, (P-20)(585), page 33P20**
**PATENTS ABSTRACTS OF JAPAN, volume 6, no. 62,
21 avril 1982, (P-111)(940)**

(73) Titulaire : **SOCAPEX**
**10 bis, quai Léon Blum**
**F-92153 Suresnes (FR)**

(72) Inventeur : **Malinge, Jean-Louis**
**THOMSON-CSF SCPI 173, bld Haussmann**
**F-75379 Paris Cedex 08 (FR)**

(74) Mandataire : **Brullé, Jean et al**
**Service Brevets Bendix 44, rue François 1er**
**F-75008 Paris (FR)**

EP 0 128 800 B1

Jouve, 18, rue St-Denis, 75001 Paris, France

## Description

La présente invention a pour objet un quadripôle optique et un multipôle comprenant de tels quadripôles.

Un coupleur d'accès à un bus série est un dispositif qui permet de prélever ou d'injecter un signal optique dans la ligne d'un système bus série. Le coupleur doit également garantir la fiabilité du bus série en cas de panne d'un terminal en isolant celui-ci.

On connaît déjà des dispositifs de couplage entre différentes lignes optiques. La demande de brevet DE-3 135 205 divulgue un dispositif à miroir mobile en translation qui permet de fractionner un faisceau lumineux incident en deux faisceaux se propageant dans des directions différentes. La demande de brevet JP-56 137 305 divulgue un dispositif qui, dans un premier état, assure la liaison optique entre une première et une deuxième voie et entre une troisième et une quatrième voie et qui, dans un deuxième état, assure seulement une liaison optique entre la première et la quatrième voie.

Un quadripôle optique pouvant constituer un coupleur d'accès à un bus série et ne perturbant pas le fonctionnement du bus série en cas de panne de celui-ci a été décrit par le Demandeur dans la demande de brevet français FR-2 538 127 déposée le 21 décembre 1982.

La présente invention a pour objet une variante avantageuse du coupleur d'accès décrit dans la demande précitée.

L'invention concerne ainsi un quadripôle optique comportant quatre branches présentant chacune des moyens pour recevoir et/ou pour transmettre des rayons lumineux et un dispositif de renvoi qui comprend un miroir monté sur un support mobile, caractérisé en ce que les rayons lumineux sont transmis selon des faisceaux optiques, ce dispositif de renvoi présentant deux états de fonctionnement, un premier état où il est réfléchissant et est susceptible de renvoyer la lumière entre une première et une deuxième branche d'une part, ainsi qu'entre une troisième et une quatrième branche d'autre part et un second état où il laisse passer la lumière entre la première et la quatrième branche d'une part, ainsi qu'entre la deuxième et la troisième d'autre part, ce support étant mobile en rotation entre deux positions, la première correspondant audit premier état et dans lequel le miroir est disposé à l'intersection des axes des faisceaux optiques des branches et la seconde correspondant au second état et dans laquelle le miroir est en dehors du trajet des rayons lumineux.

Les quatre branches peuvent être coplanaires et chaque branche former avec les branches adjacentes un angle de 90°.

Le support mobile en rotation est avantageusement cylindrique et est monté dans un alésage dont l'axe est décalé par rapport à l'intersection des faisceaux optiques.

Selon une variante, le quadripôle optique est caractérisé en ce que la première branche est agencée pour recevoir des signaux lumineux porteurs d'informations d'une section amont d'une ligne optique de transmission de donnée, en ce que la deuxième branche est reliée à un détecteur pour détecter lesdits signaux lumineux, en ce que la troisième branche comporte un émetteur desdits signaux lumineux relié électriquement audit détecteur pour produire des signaux lumineux identiques aux précédents et les envoyer dans la troisième branche après amplification, en ce que la quatrième branche comporte des moyens pour renvoyer les signaux lumineux amplifiés vers une section aval de la ligne de transmission de données de manière à fonctionner en coupleur d'accès à un bus série lorsque le dispositif de renvoi est dans son premier état, et en ce qu'il comporte des moyens pour faire passer le dispositif de renvoi dans son second état de manière à isoler du bus série le détecteur et l'émetteur formant coupleur d'accès tout en permettant la transmission de l'information entre ladite section amont et ladite section aval de la ligne de transmission.

L'invention concerne enfin un multipôle optique comportant au moins deux quadripôles optiques tels que définis ci-dessus, disposés de manière à être superposés, le support mobile et au moins un miroir monté dans celui-ci étant disposés de manière telle que la commutation simultanée des quadripôles entre l'un et l'autre desdits premier et second états est réalisée par rotation du support mobile.

L'invention sera mieux comprise à la lecture de la description qui va suivre donnée à titre d'exemple non limitatif en liaison avec les dessins qui représentent :

les figures 1 et 2, un mode de réalisation d'un quadripôle optique selon l'invention, respectivement dans son premier et son second état de fonctionnement ;

la figure 3, un multipôle optique selon l'invention.

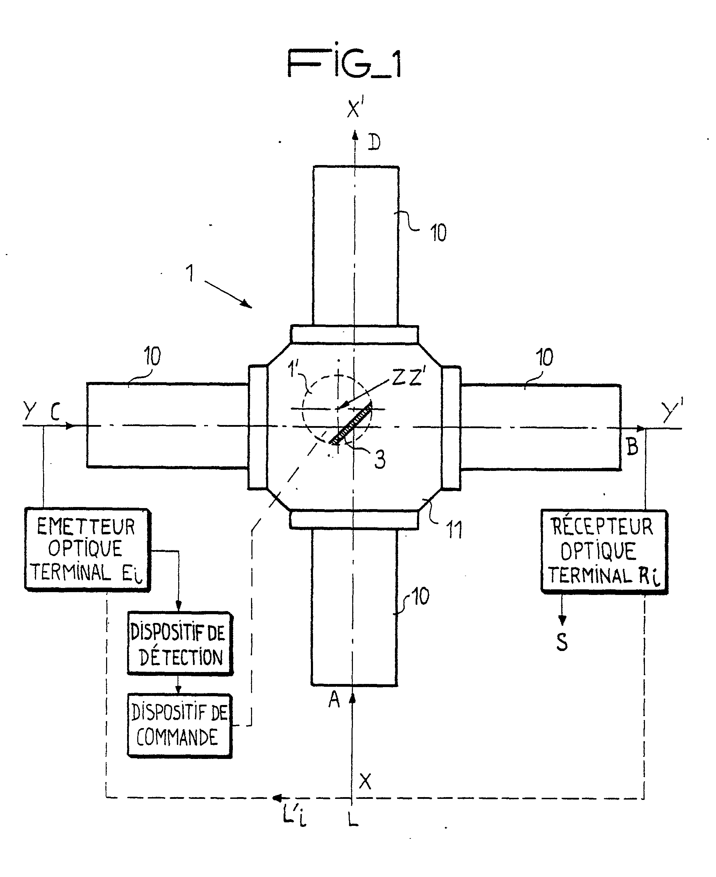

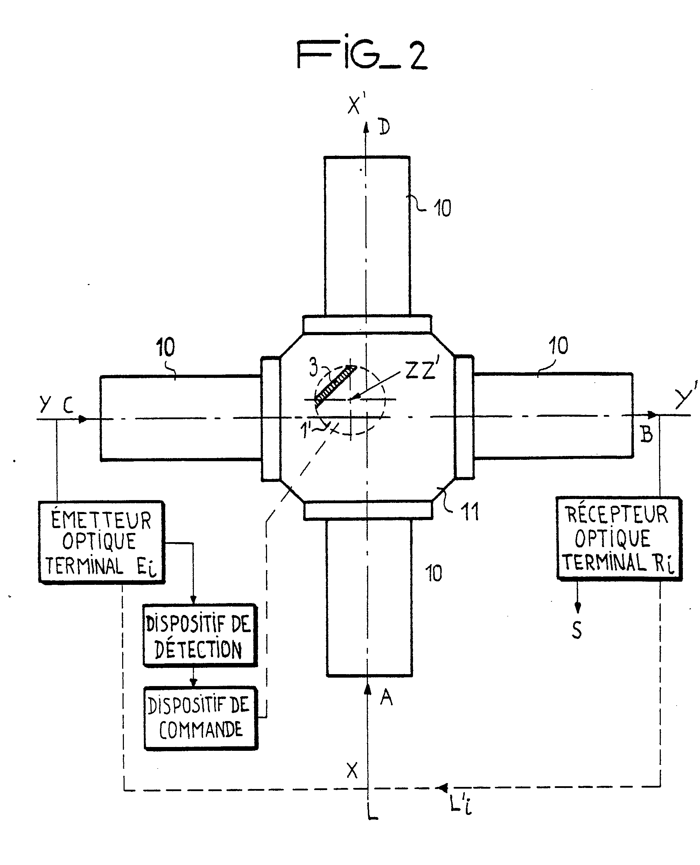

Selon les figures 1 et 2, un quadripôle optique selon l'invention, désigné par le repère général 1, comporte quatre branches (A, B, C, D) disposées à 90° l'une par rapport à l'autre et dans un même plan, chacune constituant une vue d'émission et/ou de réception optique. A la croisée des branches, au centre d'un élément central 11 présentant quatre prolongements 10 dans lesquels sont alésées les voies optiques, est disposé un miroir de renvoi 3 destiné à renvoyer les rayons lumineux de la branche A vers la branche B, et de la branche C vers la branche D. Ceci constitue un premier état ou état de travail représenté à la figure 1.

Dans un second état, le miroir 3 est effacé et la propagation des rayons lumineux se fait directement de la branche A vers la branche D et de la branche B vers la branche C. Pour ce faire, le miroir 3 est monté dans un support mobile 1' constitué par un cylindre, et qui peut tourner entre deux butées dans un alésage dont l'axe ZZ' est décalé par rapport à l'intersection des axes XX' et YY' des voies optiques. Préférentiellement l'axe ZZ' est perpendiculaire aux axes XX' et YY', comme représenté sur les figures 1 et 2. Selon la figure 1, le miroir 3 se trouve positionné de telle sorte que sa face réfléchissante coupe l'intersection des axes XX' et YY' et forme avec ceux-ci un angle de 45° produisant la déviation recherchée. Les rayons lumineux issus de la branche A sont déviés vers la branche B et ceux issus de la branche C, vers la branche D. Selon la figure 2, le support mobile, après rotation de 180° autour de son axe ZZ', est positionné de manière telle que le miroir 3 laisse passer les rayons lumineux directement de la branche A à la branche D et de la branche C à la branche B.

Le quadripôle optique selon l'invention est susceptible de plusieurs applications. C'est la fonction coupleur d'accès qui est illustrée. La branche A du quadripôle reçoit un signal en provenance d'une ligne L de transmission optique. En position de fonctionnement (figure 1), la lumière reçue par la branche A est renvoyée vers la branche B et est recueillie par un récepteur optique terminal $R_i$ qui d'une part les retransmet par une ligne auxiliaire $L'_i$ à un émetteur optique terminal $E_i$ et d'autre part décode l'information en vue de son utilisation (sqorite S). L'émetteur optique $E_i$ est connecté à la branche C située dans le prolongement de la branche B et le miroir 3 renvoie la lumière vers la branche D située dans le prolongement de la branche A.

Un dispositif de détection associé de préférence à l'émetteur optique terminal $E_i$ vérifie le fonctionnement de la transmission de l'information en réalisant des tests connus en soi sur les signaux. Si ces tests permettent de détecter une anomalie ou une panne, un dispositif de commande actionne le miroir 3 vers son second état où la lumière passera directement de la branche A à la branche D, isolant ainsi le coupleur d'accès sans perturber la transmission dans la ligne.

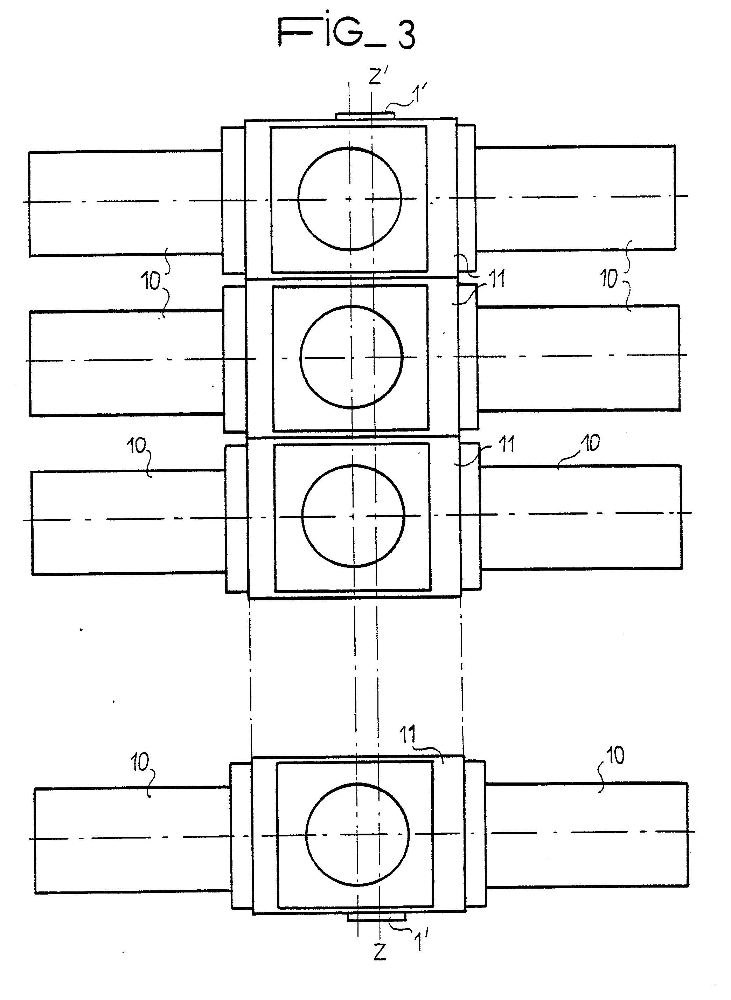

La figure 3 représente un multipôle optique associant des quadripôles optiques tels que décrits ci-dessus et qui sont empilés. Au moins un miroir est monté dans le support mobile 1' de telle sorte que la commutation simultanée des quadripôles entre l'un et l'autre desdits premier et second état est réalisée par rotation du support mobile. Le montage de plusieurs miroirs dans le support mobile 1' peut permettre de placer au moins un quadripôle dans le premier état alors qu'au moins un autre quadripôle est dans le second état, la commutation des quadripôles entre l'un et l'autre état restant simultanée.

**Revendications**

1. Quadripôle optique comportant quatre branches (A, B, C, D) présentant chacune des moyens pour recevoir et/ou pour transmettre des rayons lumineux et un dispositif de renvoi (3) qui comprend un miroir monté sur un support (1') mobile, caractérisé en ce que les rayons lumineux sont transmis selon des faisceaux optiques, ce dispositif de renvoi (3) présentant deux états de fonctionnement, un premier état où il est réfléchissant et est susceptible de renvoyer la lumière entre une première (A) et une deuxième (B) branche d'une part, ainsi qu'entre une troisième (C) et une quatrième (D) branche d'autre part et un second état où il laisse passer la lumière entre la première (A) et la quatrième (D) branche d'une part, ainsi qu'entre la deuxième (B) et la troisième (C) d'autre part, ce support (1') étant mobile en rotation entre deux positions, la première correspondant audit premier état et dans lequel le miroir (3) est disposé à l'intersection (XX', YY') des axes des faisceaux optiques des branches (A, B, C, D) et la seconde correspondant au second état et dans laquelle le miroir (3) est en dehors du trajet des rayons lumineux.

2. Quadripôle optique selon la revendication 1, caractérisé en ce que les quatre branches (A, B, C, D) sont coplanaires et en ce que chaque branche forme avec les branches adjacentes un angle de 90°.

3. Quadripôle optique selon une des revendication 1 ou 2, caractérisé en ce que le support (1') mobile en rotation est cylindrique et est monté dans un alésage dont l'axe (ZZ') est décalé par rapport à l'intersection (XX', YY') des axes des faisceaux optiques.

4. Quadripôle optique selon une des revendications précédentes, caractérisé en ce que la première branche (A) est agencée pour recevoir des signaux lumineux porteurs d'informations d'une section amont d'une ligne optique (L) de transmission de donnée, en ce que la deuxième branche (B) est reliée à un détecteur ($R_l$) pour détecter lesdits signaux lumineux, en ce que la troisième branche (C) comporte un émetteur ($E_i$) desdits signaux lumineux relié électriquement (2) audit détecteur ($R_l$) pour produire des signaux lumineux identiques aux précédents et les envoyer dans la troisième branche (C) après amplification, en ce que la quatrième branche (D) comporte des moyens pour renvoyer les signaux lumineux amplifiés vers une section aval de la ligne de transmission de données de manière à fonctionner en coupleur d'accès à un bus série lorsque le dispositif de renvoi (3) est dans son premier état, et en ce qu'il comporte des moyens pour faire passer le dispositif de renvoi (3) dans son second état de manière à isoler du bus série le détecteur et l'émetteur formant coupleur d'accès tout en permettant la transmission de l'information entre ladite section amont et ladite section aval de la ligne de transmission.

5. Multipôle optique caractérisé en ce qu'il comporte au moins deux quadripôles optiques (1) selon une des revendications précédentes, disposés de manière à être superposés, et en ce que le support mobile (1') et au moins un miroir (3) monté dans celui-ci étant disposés de manière telle que la commutation simultanée des quadripôles entre l'un et l'autre desdits premier et second états est réalisée par rotation du support mobile (1').

## Claims

1. Optical quadripole comprising four branches (A, B, C, D), each including means for receiving and/or transmitting light rays and a reflection device (3) which comprises a mirror mounted on a movable support (1'), characterized in that the light rays are transmitted along optical beams, said deflection device (3) having two operative states, a first state wherein it is reflecting and adapted to transmit the light between first (A) and second (B) branches on the one hand as well as between third (C) and fourth (D) branches on the other hand, and a second state wherein it allows to pass the light between the first (A) and fourth (D) branches on the one hand as well as between the second (B) and third (C) branches on the other hand, said support (1') being movable for rotation between two positions, the first position corresponding to said first state and wherein the mirror (3) is disposed at the intersection (XX', YY') of the axes of the optical rays of the branches (A, B, C, D), and the second position corresponding to the second state and wherein the mirror (3) is outside of the path of the light rays.

2. Optical quadripole according to claim 1, characterized in that the four branches (A, B, C, D) are coplanar and in that each branch includes an angle of 90° with the adjacent branches.

3. Optical quadripole according to any of the claims 1 and 2, characterized in that the support (1') movable for rotation is cylindrical and is mounted in a bore having an axis (ZZ') offset with respect to the intersection (XX', YY') of the optical beams.

4. Optical quadripole according to any of the preceding claims, characterized in that the first branch (A) is arranged to receive information carrying light signals of an upstream section of an optical data transmitting line (L), in that the second branch (B) is connected to a detector ($R_i$) for detecting said light signals, in that the third branch (C) comprises an emitter ($E_i$) of said light signals electrically connected (2) to said detector ($R_i$) for providing light signals identical to the preceding ones and transmitting them into the third branch (C) after amplification, in that the fourth branch (D) comprises means for transmitting the amplified light signals towards a downstream section of the data transmitting line such as to function as an access coupler to a serial bus while the deflecting device (3) is in its first state, and in that it comprises means for making the deflection device (3) pass into its second state such as to isolate the detector and emitter from the serial bus to form an access coupler while permitting the transmission of information between said upstream section and said downstream section of the data transmitting line.

5. Optical multipole, characterized in that it comprises at least two optical quadripoles (1) according to any of the preceding claims, disposed such as to be superimposed, and in that the movable support (1') and at least one mirror (3) mounted therein are disposed such that the simultaneous commutation of the quadripoles between the one and the other of said first and second states is effected by rotation of the movable support (1').

## Patentansprüche

1. Optischer Vierpol mit vier Zweigen (A, B, C, D), die jeweils versehen sind · mit Mitteln zum Empfangen und/oder Übertragen von Lichtstrahlen und einer Ablenkvorrichtung (3), die einen auf einem beweglichen Träger (1') angebrachten Spiegel aufweist, dadurch gekennzeichnet, daß die Lichtstrahlen auf optischen Lichtbündelstrecken übertragen werden, daß die Ablenkvorrichtung (3) zwei Betriebszustände aufweist, und zwar einen ersten Betriebszustand, in dem sie reflektiert und das Licht zum einen zwischen einem ersten (A) und zweiten (B) Zweig sowie zum anderen zwischen einem dritten (C) und vierten (D) Zweig überträgt, und einem zweiten Betriebszustand, in dem sie das Licht zum einen zwischen dem ersten (A) und vierten (D) Zweig sowie zum anderen zwischen dem zweiten (B) und dritten (C) Zweig hindurchtreten läßt, und daß der Träger (1') drehbeweglich ist zwischen zwei Stellungen, von denen die erste dem ersten Betriebszustand entspricht, bei dem der Spiegel (3) an der Schnittstelle (XX', YY') der Achsen der optischen Lichtbündelstrecken der Zweige (A, B, C, D) angeordnet ist, und von denen die zweite Stellung dem zweiten Betriebszustand entspricht, bei dem der Spiegel (3) außerhalb der Bahn der Lichtstrahlen liegt.

2. Optischer Vierpol nach Anspruch 1, dadurch gekennzeichnet, daß die vier Zweige (A, B, C, D) koplanar sind und daß jeder Zweig mit den angrenzenden Zweigen einen Winkel von 90° bildet.

3. Optischer Vierpol nach Anspruch 1 oder 2, dadurch gekennzeichnet, daß der drehbewegliche Träger (1') zylindrisch ausgebildet und in einer Bohrung angeordnet ist, deren Achse (ZZ') bezüglich der Schnittstelle (XX', YY') der Achsen der optischen Lichtbündelstrecken versetzt ist.

4. Optischer Vierpol nach einem der vorhergehenden Ansprüche, dadurch gekennzeichnet, daß der erste Zweig (A) so ausgebildet ist, daß er als Datenträger dienende Lichtsignale von einem stromaufwärtigen Abschnitt einer optischen Datenübertragungsleitung (L) empfängt, daß der zweite Zweig (B) mit einem Detektor ($R_i$) zum Feststellen dieser Lichtsignale verbunden ist, daß der dritte Zweig (C) einen Sender ($E_1$) für diese Lichtsignale aufweist, der elektrisch (2) mit dem Detektor ($R_i$) verbunden ist, um zu dem vorhergehenden Lichtsignal identische Lichtsignale zu erzeugen und sie nach Verstärkung in den dritten Zweig (C) zu schicken, und daß der vierte Zweig (D) mit einer Einrichtung versehen ist, die die verstärkten Lichtsignale zu einem stromabwärtigen Abschnitt der Datenübertragungsleitung schickt, so daß er als Eingangskoppler für einen seriellen Bus dient, wenn die Ablenkvorrichtung (3) sich in ihrem ersten Betriebszustand befindet, und daß er eine Einrichtung aufweist, die die Ablenkvorrichtung (3) ihren zweiten Betriebszustand einnehmen läßt, um den seriellen Bus vom Detektor und Sender abzukoppeln, was einen Eingangskoppler bildet, während er die Informationsübertragung zwischen dem stromaufwärtigen und stromabwärtigen Abschnitt der Datenübertragungsleitung zuläßt.

5. Optischer Mehrpol, dadurch gekennzeichnet, daß er mindestens zwei optische Vierpole (1) nach einem der vorhergehenden Patentansprüche aufweist, die einander überlagernd angeordnet sind, und daß der bewegliche Träger (1') und mindestens ein Spiegel (3), der in diesem angebracht ist, so angeordnet sind, daß die gleichzeitige Kommutation der vier Pole zwischen dem ersten und zweiten Zustand durch Drehen des beweglichen Trägers (1') erfolgt.

FIG_1

# FIG_2

# FIG_ 3